(19) Europäisches Patentamt

European Patent Office

Office européen des brevets

(11) Veröffentlichungsnummer : **0 302 017 B1**

(12) # EUROPÄISCHE PATENTSCHRIFT

(45) Veröffentlichungstag der Patentschrift :
**17.04.91 Patentblatt 91/16**

(21) Anmeldenummer : **88810503.8**

(22) Anmeldetag : **22.07.88**

(51) Int. Cl.⁵ : **B62D 27/06, B62D 31/02**

---

(54) **Gerippe einer Wagenseitenwand.**

---

(30) Priorität : **31.07.87 CH 2947/87**

(43) Veröffentlichungstag der Anmeldung :
**01.02.89 Patentblatt 89/05**

(45) Bekanntmachung des Hinweises auf die
Patenterteilung :
**17.04.91 Patentblatt 91/16**

(84) Benannte Vertragsstaaten :
**AT BE CH DE ES FR GB GR IT LI LU NL SE**

(56) Entgegenhaltungen :
**CH-A- 608 997**
**DE-A- 2 829 342**
**DE-B- 1 269 906**
**FR-A- 1 310 650**

(73) Patentinhaber : **ALUSUISSE-LONZA**
**SERVICES AG**
**Feldeggstrasse 4**
**CH-8034 Zürich (CH)**
Patentinhaber : **Karl Kässbohrer**
**Fahrzeugwerke GmbH**
**Peter-Schmid-Strasse 13**
**W-7900 Ulm (Donau) (DE)**

(72) Erfinder : **Waldeck, Klaus-Dieter**
**Sonnenbergstrasse 18**
**CH-8102 Oberengstringen (CH)**
Erfinder : **Stangl, Gerhard**
**Mozartstrasse 11**
**W-7909 Dornstadt (DE)**
Erfinder : **Mack, Kurt**
**Achstrasse 45**
**W-7907 Langenau (DE)**

EP 0 302 017 B1

## Beschreibung

Die Erfindung betrifft ein Gerippe einer Wagenseitenwand aus stranggepressten Leichtmetallprofilen für Strassen- und Schienenfahrzeuge zur Personenbeförderung mit über die Wagenlänge durchgehenden Dachprofilen, zwischen den Türbereichen durchgehenden Seitenwandprofilen und quer dazu verlaufenden Profilpfosten.

Ein derartiges Gerippe ist aus der DE-G-27 51 753 bekannt. Die Profile werden durch Eckverbindungsstücke mit Pfosten befestigt, wobei die Profile und die Eckverbindungsstücke miteinander im Eingriff stehende Führungselemente in Form von Nut und Feder aufweisen und durch Verschrauben oder Verschweissen verbunden sind. Teilweise durchgreifen die Pfosten die Seitenwandprofile, was entsprechende Ausfräsungen in den Seitenwandprofilen notwendig macht.

Im Reparaturfall ist bei der bekannten Gerippekonstruktion das Auswechseln von einzelnen Bestandteilen zum Teil aufwendig, da die Gesamtkonstruktion die Zugänglichkeit zu den Einzelbestandteilen erschwert. Insbesondere können die Seitenwandprofile, welche zugleich Aussenwandverkleidung ist und als Kollisionsschutz für die Fahrgäste dient, nicht ohne Stützpfosten zu lösen montiert und demontiert werden.

Angesichts dieser Gegebenheiten haben sich die Erfinder die Aufgabe gestellt, ein Gerippe einer Wagenseitenwand der eingangs erwähnten Art zu schaffen, welches die Auswechselbarkeit der Seitenwandprofile in einfacher Weise ermöglicht und darüber hinaus eine hohe Quersteifigkeit aufweist, so dass die Ueberrollsicherheit gegeben ist.

Die Erfinder gehen bei ihrer Zielsetzung von der sozialen Pflicht und Erwartung aus, dass die von der UNO vorgeschlagenen Normen (ECE-Vorschriften) bezüglich Sicherheit des Fahrbetriebes, insbesondere die vorgegebenen Belastungswerte im Falle eines Unfalles mit Um- oder Ueberschlagfolge, bei allen inskünftigen entsprechenden Fahrzeugkonstruktionen berückstigt werden sollten und ohnehin zu erwarten ist, dass diese in absehbarer Zeit durch Regelungen territorialer Gesetzgebung vorgeschrieben werden.

Vornehmlich bei der Leichtmetallbauweise ist von Bedeutung, dass die Verbindungen der einzelnen Bestandteile des Gerippes den Beanspruchungen des Fahrbetriebes nach dieser Norm gewachsen sind.

Erfindungsgemäss wird die gestellte Aufgabe durch ein Gerippe einer Wagenseitenwand gelöst, welches sich nach dem Wortlaut des Anspruchs 1 auszeichnet.

Vorteilhafte Weiterbildungen des erfindungsgemässen Gerippes sind durch die Merkmale der Ansprüche 2 bis 16 gekennzeichnet.

Eine hohe Quersteifigkeit wird durch die dreiteilige Profilverbindung von Profilpfosten und Dach- und Seitenwandprofil, welch letzteres keine Ausfräsungen und damit Schwächezonen aufweist, und der zusätzlichen vierteiligen Profilverbindung von Seitenwandprofil, dazu gehörigem Ober- und Untergurt und diese verbindenden Profilpfosten gewährleistet. Damit ist die Verwendung von Strangpressprofilen ohne vorherige Bearbeitung möglich, was eine einfache Herstellbarkeit des Gerippes gewährleistet. Durch die wesentliche Verwendung von Klemmverbindungen ist es möglich, im Reparaturfall die Teile leicht auszuwechseln.

Weitere Vorteile und Einzelheiten ergeben sich aus der Zeichnung. Diese zeigt in

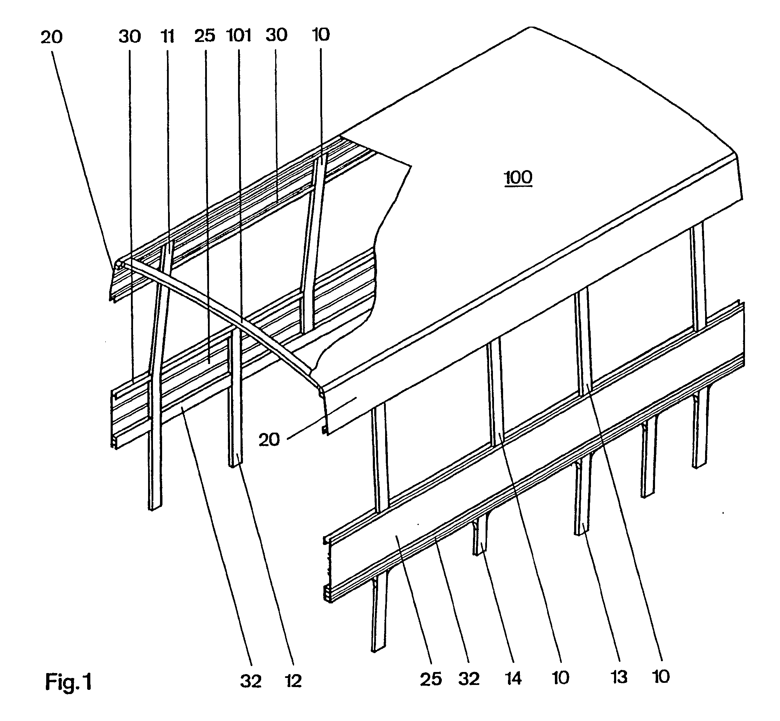

Fig. 1 einen schematischen Ausschnitt des Gerippes der Wagenseitenwand in perspektivischer Ansicht,

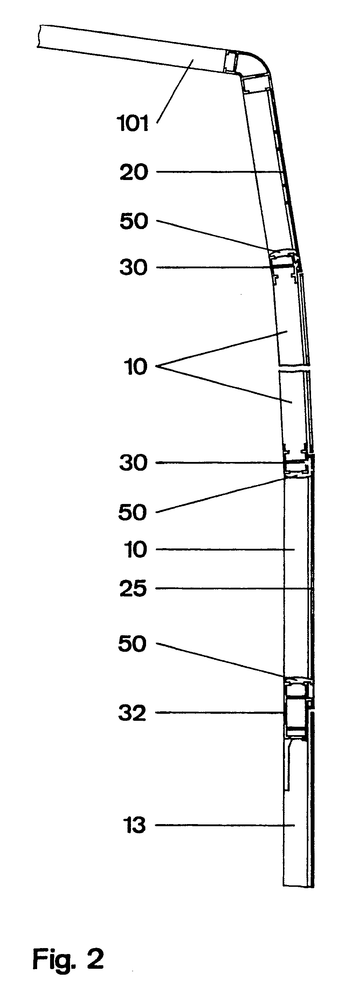

Fig. 2 einen Querschnitt durch das Gerippe der Wagenseitenwand zwischen Pfosten 10 und fluchtenden Pfosten 10, 13 von Fig. 1,

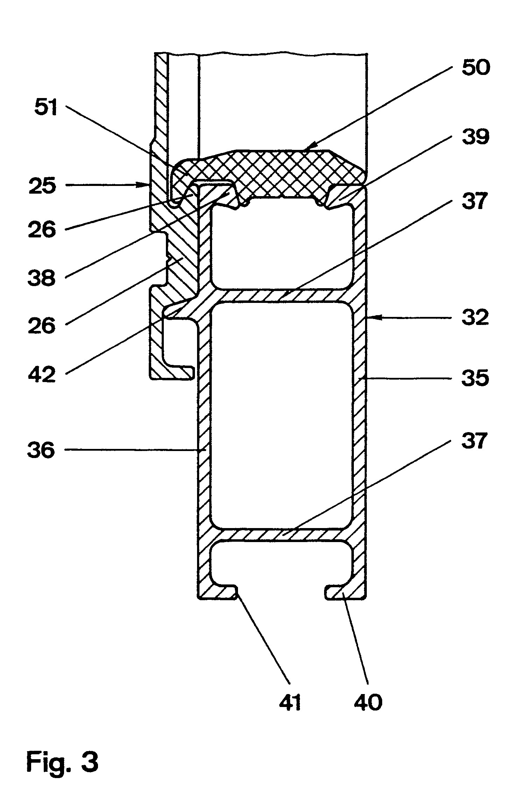

Fig. 3 einen vergrösserten Ausschnitt im Bereich des Untergurts von Fig. 2, und in

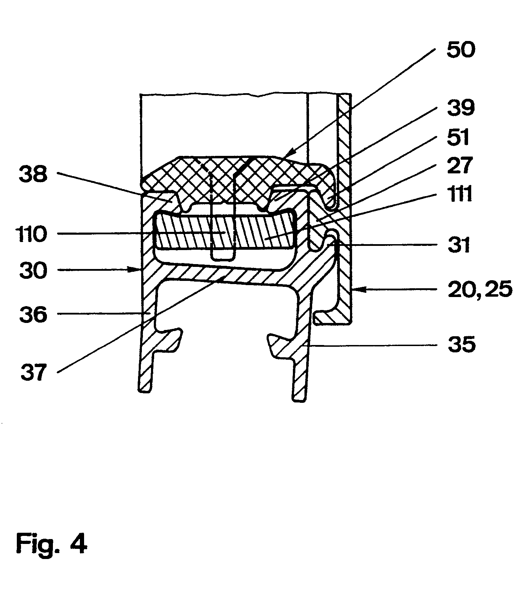

Fig. 4 einen vergrösserten Ausschnitt im Bereich des Obergurts von Fig. 2.

Zwei Wagenseitenwände sind über dem Dachaufbau 100, 101 miteinander verbunden. Die einstückigen Profilpfosten 10 hintergreifen sowohl die Dach- als auch seitenwandprofile 20, 25. Die Profilpfosten 10 sind mindestens teilweise auf der Höhe der Dachprofile 20 einseitig mit den Obergurten 30 der Dach- und Seitenwandprofile 20, 25 mit den Ober- und Untergurten 30, 32 und auf der Höhe der Seitenwandprofile 25 einseitig mit den entsprechenden Obergurten 30, und Untergurten 32, wobei alle Ober- und Untergurten 30, 32 parallel zu den Dach- und Seitenwandprofilen 20, 25 verlaufen, verbunden. Die Verbindung der Dach- und Seitenwandprofile 20, 25 mit den Ober- und Untergurten 30, 32 erfolgt mit den Klemmprofilen 50.

Ferner hintergreifen Stützpfosten 12 die Seitenwandprofile bis etwa zu ihrer Oberkante. Diese Pfosten sind in gleicher Weise an die Ober- und Untergurte 30, 32 befestigt wie die Profilpfosten 10. Zur weiteren Versteifung der Gerippekonstruktion sind Trägerpfosten 13, welche von der Gerippeunterkante bis zu Unterkante der Seitenwandprofile 25 reichen und mit den Untergurten 32 verbunden sind, vorgesehen. Vorteilhaft werden die Trägerpfosten 13 unterhalb der Profilpfosten 10 angeordnet, so dass diese fluchten, was zur erheblichen Erhöhung der Versteifung in diesem Bereich führt, da die Trägerpfosten 13 üblicherweise mit dem Chassis verbunden werden, wodurch eventuelle auf das Gerippe durch äussere Einflüsse, beispielsweise bei einer Kollision, einwirkende Kräfte in das Chassis eingeleitet und verteilt werden.

Es ist jedoch auch möglich, statt einer eben beschriebenen zweiteiligen Abstützung durch Pfosten 10 und 12 oder 10 und 13 die Profilpfosten mindestens teilweise bis zur Gerippeunterkante durchlaufen zu lassen – eine Konstruktion wie sie Profilpfosten 11 zeigt – oder beide vorgenannten Möglichkeiten am Gerippe einer Wagenseitenwand zu kombinieren.

Zwischen den Pfosten 11, 12, 13 können weitere Verstärkungspfosten 14, welche nicht bis zur Gerippeunterkante reichen, angeordnet sein.

Die Verbindung der Pfosten 10 bis 14 mit den Ober- und/oder Untergurten 30, 32 wird in an sich bekannter Weise, beispielsweise gemäss den Vorschlägen nach der DE-PS 27 51 753, durch Eckverbindungsstücke, welche bevorzugt durch Verschraubungen befestigt sind, bewirkt.

Vorteilhaft ist es, die Profilpfosten 10, 11 mindestens teilweise gleichzeitig als Fenstersäulen zu verwenden und besonders vorteilhaft wird die Ausgestaltung des Fensters dann, wenn zusätzlich Teile der Obergurte 30, den Fensterrahmen bilden, da dann keine zusätzliche Rahmenbauelemente mehr notwendig sind. Haben die als Fenstersäulen dienenden Pfosten 10, 11 und die zugehörigen Obergurtteile 30, eine entsprechend geglättete Profilkontur, so kann der dadurch gebildete Fensterrahmen das Fensterglas direkt durch Verklebung aufnehmen. Ein solcher Fensterrahmen wird vorteilhaft frei von Eckstücken ausgestaltet.

Die Ober- und Untergurte 30, 32 weisen durch mindestens einen Steg 37 verbundene Schenkel 35, 36 auf, welche zur Querschnittsmittellinie gerichtete und im Querschnitt nokkenförmig ausgebildete Leisten 38, 39 enthalten, die so angeordnet sind, dass sie eine Hinterschneidung bilden. In die Leisten 38, 39 greifen jeweils die Klemmprofile 50 ein und werden mit Hilfe der Verschraubung 110, 111 mit den Gurten 30, 32 verbunden.

Die Klemmprofile 50 ihrerseits weisen zu den Seitenwand-und/oder Dachprofilen 25, 20 gerichtete, im Querschnitt L-förmige Zapfenleisten 51 auf.

Neben der vorher beschriebenen Verbindungsart der Pfosten wird die Verbindung der einzelnen Bauteile dadurch bewirkt, dass die Untergurte 32 an dem der nockenförmig ausgebildeten Leisten 38, 39 gegenüberleigenden Teil des Schenkelpaars 35, 36 zur Querschnittsmittllinie endständige Nockenleisten 40, 41 aufweisen, in die die Träger- und/oder Verstärkungspfosten 13, 14 geführt sind, und zu den Seitenwandprofilen 25 gerichtete Auflageleisten 42 ausgebildet sind, sodass die Nockenleisten 26 der Seitenwandprofile 25 gestützt werden und gleichzeitig mit den Zapfenleisten 51 der Klemmprofile 50 in formschlüssigem Eingriff stehen und die Verbindung der Obergurte 30 mit den Seitenwand und/oder Dachprofilen 25, 20 in analoger Weise erfolgt, indem die Obergurte 30 zu den Seitenwand- und/oder Dachprofilen 25, 20 gerichtete, den Zapfenleisten 51 der Klemmprofile 50 zugewandte, im Querschnitt L-förmige Zapfenleisten 31 aufweisen, wodurch die Zapfenleisten 31, 51 der beiden Profile 30, 50 jeweils eine Hinterschneidung bilden, in die jeweils ein im Querschnitt T-förmiges Zapfenprofil 27 der Seitenwand 25 und/oder des Dachprofils 20 formschlüssig eingreift.

Aufgrund der ineinandergreifenden Bauteile ohne Ausarbeitung, z.B. Ausfräsungen, von Dach- und/oder Seitenwandprofilen wird ein Gerippe einer Wagenseitenwand erhalten, das sowohl den Belastungswerten nach den ECE-Vorschriften standhält, als auch eine einfache Montage bzw. Demontage der Bauteile im Reparaturfall, insbesondere der Seitenwandprofile, welche von Beschädigungen bei Unfällen besonders betroffen sind, erlaubt.

## Ansprüche

1. Gerippe einer Wagenseitenwand aus stranggepressten Leichtmetallprofilen für Strassen- und Schienenfahrzeuge zur Personenbeförderung mit über die Wagenlänge durchgehenden Dachprofilen (20), zwischen den Türbereichen durchgehenden Seitenwandprofilen (25) und quer dazu verlaufenden Profilpfosten (10, 11) dadurch gekennzeichnet, dass einstückige Profilpfosten (10, 11) Dach- (20) als auch Seitenwandprofile (25) hintergreifen und durch mindestens teilweise auf der Höhe der Dach- und Seitenwandprofile (20) einseitig mit Obergurten (30) und auf der Höhe der Seitenwandprofile (25) einseitig mit ensprechenden Obergurten (30) und Untergurten (32) verbunden sind, wobei letztere parallel zu den Dach-(20) und Seitenwandprofilen (25) verlaufen und an den Dach-(20) und/oder Seitenwandprofilteilen (25) mittels Klemmprofilen (50) befestigt sind.

2. Gerippe nach Anspruch 1, dadurch gekennzeichnet, dass zusätzlich von der Gerippeunterkante bis etwa zur Oberkante der Seitenwandprofile reichende Stützpfosten (12) die Seitenwandprofile (25) hintergreifen und durch mindestens teilweise auf der Höhe der Seitenwandprofile (25) angeordnete, an letztere über einseitig befestigte Ober- (30) und Untergurte (32) miteinander verbunden sind.

3. Gerippe nach Anspruch 1 oder 2, dadurch gekennzeichnet, dass die Untergurte (32) mit etwa von der Gerippeunterkante bis zur Unterkante der Seitenwandprofile (25) reichende Trägerpfosten (13) verbunden sind.

4. Gerippe nach Anspruch 3, dadurch gekennzeichnet, dass die Trägerpfosten (13) und Profilpfosten (10) mindestens teilweise fluchten.

5. Gerippe nach einem der Ansprüche 1 bis 4, dadurch gekennzeichnet, dass Profilpfosten (11) teilweise bis zur Gerippeunterkante durchlaufen.

6. Gerippe nach einem der Ansprüche 2 bis 5, dadurch gekennzeichnet, dass die bis zur Gerippeunterkannte reichenden Pfosten (11, 12, 13) als an einem Wagenchassis befestigbar ausgebildet sind.

7. Gerippe nach einem der Ansprüche 1 bis 6, dadurch gekennzeichnet, dass sich mindestens teilweise zwischen den bis zur Gerippeunterkante reichenden Pfosten (11, 12, 13) ein nicht bis zur Gerippeunterkante reichender, mit dem entsprechenden Untergurt (32) verbundener Verstärkungspfosten (14) befindet.

8. Gerippe nach Anspruch 1 bis 7, dadurch gekennezeichnet, dass die Verbindung der Pfosten (10 bis 14) mit den Ober-(30) und/oder Untergurten (32) durch Eckverbindungsstücke bewirkt ist.

9. Gerippe nach einem der Ansprüche 1 bis 8, dadurch gekennzeichnet, dass die Profilpfosten (10, 11) mindestens teilweise Fenstersäulen bilden.

10. Gerippe nach Anspruch 9, dadurch gekennzeichnet, dass je zwei benachbarte Fenstersäulen bildende Pfosten (10, 10 ; 10, 11) und die dazwischen liegenden Teile der Obergurte (30) einen kragenlosen Fensterrahmen bilden.

11. Gerippe nach Anspruch 10, dadurch gekennzeichnet, dass der Fensterrahmen eine zur Verklebung eines Fensterglases geglättete Profilkontur aufweist.

12. Gerippe nach Anspruch 8 bis 11, dadurch gekennzeichnet, dass die Profilpfosten (10, 11) im als Fensterbereich eckverbindungsstückfrei sind.

13. Gerippe nach einem der Ansprüche 1 bis 12, dadurch gekennzeichnet, dass die Ober-(30) und Untergurte (32) durch mindestens einen Steg (37) verbundene Schenkel (35, 36) mit mindestens an einer Seite des Schenkelpaars (35, 36) zur Querschnittsmittellinie gerichtete, im Querschnitt nockenförmig ausgebildete, eine Hinterschneidung bildende Leisten (38, 39) aufweisen, in welche jeweils Klemmprofile (50) durch Verschraubung mit den Gurten eingreifen.

14. Gerippe nach einem der Ansprüche 1 bis 13, dadurch gekennzeichnet, dass die Klemmprofile (50) zu den Seitenwand- (25) und/oder Dachprofilen (20) gerichtete, im Querschnitt L-förmige Zapfenleisten (51) aufweisen.

15. Gerippe nach einem der Ansprüche 1 bis 14, dadurch gekennzeichnet, dass die Untergurte (32) an dem der nockenförmig ausgebildeten Leisten (38, 39) gegenüberliegenden Teil des Schenkelpaars (35, 36) zur Querschnitsmittellinie gerichtete endständige Nockenleisten (40, 41), in die die Träger- (13) und-/oder Verstärkungspfosten (14) geführt sind, und zu den Seitenwandprofilen (25) gerichtete Auflageleisten (42) aufweisen, die die in formschlüssigem Eingriff mit den Zapfenleisten (51) der Klemmprofile (50) stehenden Nockenleisten (26) der Seitenwandprofile (25) stützen.

16. Gerippe nach einem der Ansprüchen 1 bis 15, dadurch gekennzeichnet, dass die Obergurte (30) zu den Seitenwand- (25) und/oder dachprofilen (20) gerichtete, den Zapfenleisten (51) der Klemmprofile (50) zugewandte, im Querschnitt L-förmige Zapfenleisten (31) aufweisen, wobei die Zapfenleisten (31, 51) der beiden Profile (30, 50) jeweils eine Hinterschneidung bilden, in die jeweils ein im Querschnitt T-förmiges Zapfenprofil (27) der Seitenwand- (25) und/oder Dachprofile (20) formschlüssig eingreift.

**Claims**

1. Frame of a side panel of a carriage made of extruded light metal profiles for road vehicles and trackbound vehicles for passenger transport having continuous roof profiles (20) over the length of the carriage, continuous side panel profiles (25) between the door regions and profile pillars (10, 11) extending transversely thereto, characterized in that one-piece profile pillars (10, 11) engage behind roof (20) and side panel profiles (25) and are at least partially connected by (sic) to upper flanges (30) on one side at the level of the roof and side panel profiles (20) and to corresponding upper flanges (30) and lower flanges (32) on one side at the level of the side panel profiles (25), the latter upper and lower flanges extending parallel to the roof (20) and side panel profiles (25) and being attached to the roof (20) and/or side panel profile parts (25) by means of clamping profiles (50).

2. Frame according to Claim 1, characterized in that additionally support pillars (12) extending from the lower edge of the frame up to about the upper edge of the side panel profiles engage behind the side panel profiles (25) and are at least partially connected to each other by (sic) via upper (30) and lower flanges (32) arranged at the level of the side panel profiles (25) and attached to the latter on one side.

3. Frame according to Claim 1 or 2, characterized in that the lower flanges (32) are connected to bearing pillars (13) extending approximately from the lower edge of the frame up to the lower edge of the side panel profiles (25).

4. Frame according to claim 3, characterized in that the bearing pillars (13) and profile pillars (10) are at least partially aligned.

5. Frame according to one of claims 1 to 4, characterized in that profile pillars (11) pass through partially up to the lower edge of the frame.

6. Frame according to one of Claims 2 to 5, characterized in that the pillars (11, 12, 13) extending up to the lower edge of the frame are constructed so as to be attachable to a carriage chassis.

7. Frame according to one of Claims 1 to 6, characterized in that a reinforcing pillar (14) which does not extend up to the lower edge of the frame and is connected to the corresponding lower flange (32), is situated at least partially between the pillars (11, 12, 13) extending up to the lower edge of the frame.

8. Frame according to Claim 1 to 7, characterized in that the connection of the pillars (10 to 14) to the upper (30) and/or lower flanges (32) is effected by corner connection pieces.

9. Frame according to one of Claims 1 to 8, characterized in that the profile pillars (10, 11) at least partially form window columns.

10. Frame according to Claim 9, characterized in that pillars (10, 10 ; 10, 11) forming two adjacent window columns in each case and the parts of the upper flanges (30) located in between form a collarless window frame.

11. Frame according to Claim 10, characterized in that the window frame has a smoothed profile contour for bonding a pane of glass.

12. Frame according to Claim 8 to 11, characterized in that the profile pillars (10, 11) in the as (sic) window region are free from corner connection pieces.

13. Frame according to one of Claims 1 to 12, characterized in that the upper (30) and lower flanges (32) have limbs (35, 36) connected by at least one web (37) having at least on one side of the pair of limbs (35, 36) strips (38, 39) which are directed towards the cross-sectional centre line, are cam-shaped in cross section and form an undercut, in which strips clamping profiles (50) engage in each case by a screw connection to the flanges.

14. Frame according to one of Claims 1 to 13, characterized in that the clamping profiles (50) have pin strips (51) which are directed towards the side panel (25) and/or roof profiles (20) and are L-shaped in cross section.

15. Frame according to one of Claims 1 to 14, characterized in that, on the part of the pair of limbs (35, 36) opposite the cam-shaped strips (38, 39), the lower flanges (32) have at the end cam strips (40, 41) directed towards the cross-sectional centre line, in which the bearing (13) and/or reinforcing pillars (14) are guided, and have resting strips (42) which are directed towards the side panel profiles (25) and support the cam strips (26) of the side panel profiles (25), said cam strips being in positive-fit engagement with the pin strips (51) of the clamping profiles (50).

16. Frame according to one of Claims 1 to 15, characterized in that the upper flanges (30) have pin strips (31) which are directed towards the side panel (25) and/or roof profiles (20), face the pin strips (51) of the clamping profiles (50) and are L-shaped in cross section, the pin strips (31, 51) of the two profiles (30, 50) each forming an undercut, in which in each case a cross-sectionally T-shaped pin profile (27) of the side panel (25) and/or roof profiles (20) engages with positive fit.

## Revendications

1. Ossature de paroi latérale de véhicule en profilés extrudés en métal léger destinée à des véhicules de transport public sur rails ou sur routes, comportant des profilés de toit (20) continus sur la longueur du véhicule, des profilés de paroi latérale (25) continus entre les zones des portières et des montants profilés perpendiculaires (10, 11)
caractérisée en ce que
des montants profilés monoblocs (10, 11) passent le long des profilés de toit (20) et des profilés de paroi latérale (25) et sont assemblés au moins partiellement à hauteur des profilés de toit et de paroi (20) sur une face aux membrures supérieures (30) et à hauteur des profilés de paroi latérale (25) sur une face aux membrures supérieures (30) et membrures inférieures (32) correspondantes, ces dernières étant parallèles aux profilés de toit (20) et de paroi latérale (25) et étant fixées aux parties de profilés de toit (20) et/ou de paroi latérale (25) par des profilés de serrage (50).

2. Ossature selon la revendication 1, caractérisée en ce qu'en outre, des montants de soutien (12) allant de l'arête inférieur de l'ossature jusqu'à environ l'arête supérieure des profilés de paroi latérale passent le long des profilés de paroi latérale (25) et sont assemblés entre eux au moins partiellement par des membrures supérieures (30) et des membrures inférieures (32) disposées à hauteur des profilés de paroi latérale (25) et fixées sur une face à ceux-ci.

3. Ossature selon la revendication 1 ou 2, caractérisée en ce que les membrures inférieures (32) sont assemblées à des montants porteurs (13) allant environ de l'arête inférieure de l'ossature jusqu'à l'arête inférieure des profilés de paroi latérale (25).

4. Ossature selon la revendication 3, caractérisée en ce que les montants porteurs (13) et les montants profilés (10) sont au moins partiellement alignés.

5. Ossature selon l'une quelconque des revendications 1 à 4, caractérisée en ce que les montants profilés (11) atteignent partiellement l'arête inférieure de l'ossature.

6. Ossature selon l'une quelconque des revendications 2 à 5, caractérisée en ce que les montants (11, 12, 13) atteignant l'arête inférieure de l'ossature sont conçus de façon à être fixables au châssis du véhicule.

7. Ossature selon l'une quelconque des revendications 1 à 6, caractérisée en ce qu'existe au moins partiellement entre les montants (11, 12, 13) atteignant l'arête inférieure de l'ossature un montant de renforcement (14) n'atteignant pas l'arête inférieure de l'ossature, assemblé à la membrure inférieure (32) correspondante.

8. Ossature selon les revendications 1 à 7, caractérisée en ce que l'assemblage des montants (10 à 14) aux membrures supérieures (30) et/ou inférieures (32) est obtenu par des cornières.

9. Ossature selon l'une quelconque des revendications 1 à 8, caractérisée en ce que les montants profilés (10, 11) forment au moins partiellement des montants de vitre.

10. Ossature selon la revendication 9, caractérisée en ce que deux montants (10, 10 ; 10, 11) constituant deux montants de vitre voisins et les parties des membrures supérieures (30) situées entre eux forment un cadre de vitre sans collerette.

11. Ossature selon la revendication 10, caractérisée en ce que le cadre de vitre présente un contour adouci pour le collage d'une vitre.

12. Ossature selon les revendications 8 à 11, caractérisée en ce que les montants profilés (10, 11) sont conçus en l'absence de cornières dans la zone de la vitre.

13. Ossature selon l'une quelconque des revendications 1 à 12, caractérisée en ce que les membrures supérieures (30) et inférieures (32) présentent des ailes (35, 36) reliées par au moins une entretoise (37) présentant au moins sur un des côtés du couple d'ailes (35, 36) des nervures (38, 39) à section transversale en ergot, dirigées vers l'axe transversal formant une contre-dépouille, dans lesquelles les profilés de serrage (50) s'engagent par vissage aux membrures.

14. Ossature selon l'une quelconque des revendications 1 à 13, caractérisée en ce que les profilés de serrage (50) présentent des nervures à tenon à section en L (51) dirigées vers les profilés de paroi latérale (25) et/ou les profilés de toit (20).

15. Ossature selon l'une quelconque des revendications 1 à 14, caractérisée en ce que les membrures inférieures (32) présentent des nervures à ergot (40, 41) terminales dirigées vers l'axe transversal à la partie du couple d'ailes (35, 36) opposée aux nervures en forme d'ergot (38, 39) et dans lesquelles sont guidés les montants porteurs (13) et/ou les montants de renforcement (14), et des nervures de soutien (42) dirigées vers les profilés de paroi latérale (25) qui soutiennent les nervures à ergot (26) des profilés de paroi latérale (25) engagées par assemblage de forme dans les nervures à tenon (51) des profilés de serrage (50).

16. Ossature selon l'une quelconque des revendications 1 à 15, caractérisée en ce que les membrures supérieures (30) présentent des nervures à tenon à section en L (31) dirigées vers les profilés de paroi latérale (25) et/ou les profilés de toit (20), tournées vers les nervures à tenon (51) des profilés de serrage (50), les nervures à tenon (31, 51) des deux profilés (30, 50) formant chacune une contre-dépouille dans laquelle s'engage par assemblage de forme un profil à section en T (27) des profilés de paroi latérale (25) et/ou des profilés de toit (20).

Fig. 1

EP 0 302 017 B1

101

20

50

30

10

30

50

10

25

50

32

13

# Fig. 2

Fig. 3

**Fig. 4**